# EUROPEAN PATENT APPLICATION

(11) **EP 3 754 957 A1**
(43) Date of publication of application: **23.12.2020**
(21) Application number: 18906418.1
(22) Date of filing: 25.05.2018
(51) Int. Cl.: H04M 1/725

(54) **MOBILE TERMINAL AND CONTROL METHOD THEREFOR**

(30) Priority: 14.02.2018 US 201862630274 P
(71) Applicant: LG Electronics Inc., 07336 SEOUL (KR)
(72) Inventor: YUN, Jiwon, Seoul 06772 (KR); KANG, Pilsuk, Seoul 06772 (KR); KIM, Changmok, Seoul 06772 (KR); KU, Hyerim, Seoul 06772 (KR); CHUNG, Eunyoung, Seoul 06772 (KR)
(74) Representative: Mooser, Sebastian Thomas
(86) International application number: PCT/KR2018/005995
(87) International publication number: WO 2019/160198

(57) **Abstract**

Disclosed are a mobile terminal and a control method therefor. The mobile terminal, according to one embodiment of the present invention, comprises: a camera provided to a main body; a display unit for displaying a preview image for the photographing of the camera; and a control unit for detecting the entering into of a subject information search mode while the preview image is being displayed, and in the information search mode, detecting the selection of one search option among a plurality of search options for a subject. In addition, on the basis of a touch input applied to the preview image, the control unit photographs the subject, including an object to which the selected search option is to be applied, and displays, on the display unit, an image of the photographed subject along with a screen where the selected search option is applied.

## Description

### BACKGROUND

### 1. Technical Field

The present disclosure relates to a mobile terminal having a camera and a control method thereof.

### 2. Description of the Related Art

Terminals may be divided into mobile/portable terminals and stationary terminals according to their mobility. Furthermore, mobile terminals may be divided into handheld terminals and vehicle mounted terminals according to whether or not it can be directly carried by a user.

The functions of mobile terminals have been diversified. For example, the functions may include data and voice communication, photographing and video shooting through a camera, voice recording, playing a music file through a speaker system, and displaying an image or video on a display module. Some terminals further include an electronic game play function or perform a multimedia player function. In particular, in recent years, mobile terminals may receive multicast signals that provide visual content such as broadcast, video or television programs.

As it becomes multifunctional, for example, such a terminal is allowed to capture still images or moving images, play music or video files, play games, receive broadcast and the like, so as to be implemented as an integrated multimedia player.

In recent years, as the use of the camera in the terminal is further increased and the pixels of the applied camera are further improved, various functions or shooting modes as in a professional camera are provided. For such an example, a service option that analyzes an image of a subject and provides an appropriate search function, and the like for user's convenience has appeared.

However, an option different from the user's intention may be provided since this automatically analyzes an image of the captured subject and provides an option determined to be appropriate according to the subject. This may be due to an error in the image analysis of the subject, a difference in the application range of the option, or due to the very diverse preferences of users, and there is a limit in reflecting the user's taste through image analysis alone.

In this case, the user still has the inconvenience of having to go back to the previous step and manually set or change the desired service option or application target. In addition, there is a loss of time and resources due to unnecessary image analysis.

### SUMMARY

Accordingly, one aspect according to an embodiment of the present disclosure is to provide a mobile terminal and a control method thereof capable of accurately specifying a user's desired option from a subject to be captured, and then providing various search functions through the image analysis.

Furthermore, another aspect according to an embodiment of the present disclosure is to provide a mobile terminal and a control method thereof capable of acquiring a desired search result based on the information of the captured image by simply capturing an object in reality through a camera without going through a separate search window or a web search.

In addition, another aspect according to an embodiment of the present disclosure is to provide a mobile terminal and a control method thereof capable of accurately specifying a user's desired part of objects when a plurality of objects are included in a subject to be captured, and selectively receiving only search results for the desired part.

In order to achieve the foregoing objectives, a mobile terminal according to an embodiment of the present disclosure may include a camera provided in a main body; a display module that displays a preview image for the shooting of the camera; and a controller that detects the entry of a subject into an information search mode while the preview image is being displayed, and detects the selection of one of a plurality of search options for the subject in the information search mode, wherein the controller captures a subject including an object to which the selected search option is to be applied, and displays an image of the captured subject along with an application screen of the selected search option on the display module.

Furthermore, in one embodiment, a plurality of items corresponding to an execution result of the selected search option for the object may be displayed on the application screen of the selected search option, and a page screen linked to the selected item may be displayed in response to the selection of any one of the displayed plurality of items.

Furthermore, in one embodiment, when a touch input is applied to a background region of the preview image subsequent to the selection of a search option, the selected search option may be applied to all objects included in the preview image.

Furthermore, in one embodiment, when a back execution command is received while the application screen of the selected search option is displayed, it may be switched to a screen for changing an object to which the selected search option is to be applied.

Furthermore, in one embodiment, when a touch input is applied to any one object in a preview image including a plurality of objects subsequent the selection of a search option, the controller may limit the application of the selected search option to the remaining objects.

Furthermore, in one embodiment, while the image of the captured subject is displayed along with the application screen of the selected search option, a guide image indicating an object to which the selected search option is to be applied may be displayed on the image of the captured subject.

In addition, a mobile terminal according to an embodiment of the present disclosure may include a camera provided in a main body; a display module that displays a preview image for the shooting of the camera; and a controller that detects the entry of a subject into an information search mode while the preview image is being displayed, and detects the selection of a text search option among a plurality of search options for the subject in the information search mode, wherein the controller extracts text information to which the text search option is to be applied from the preview image based on a touch input applied to the preview image, and switches the preview image to an extraction screen displayed with the extracted text information, and switches the plurality of search options to a function icon related to the processing of text information displayed on the extraction screen to display the function icon.

Furthermore, in one embodiment, the function icon related to the processing of the text information may be determined differently according to the attribute of the text information displayed on the extraction screen.

Furthermore, in one embodiment, an execution screen of a function corresponding to the selected function icon for the text information may be displayed on the display module in response to the selection of any one of functions icons related to the processing of the text information.

Furthermore, in one embodiment, when a touch input is applied to the execution screen, information displayed on the execution screen may be saved along with the extraction screen.

Furthermore, in one embodiment, in response to the selection of some texts in the extraction screen while a first group of function icons are being displayed, the first group of function icons may be changed to a second group of function icons related to the attribute of the selected some texts.

Furthermore, in one embodiment, a capture image of the preview image may be stored in a memory while text information is extracted from the preview image according to a touch input applied to the preview image.

As described above, according to a mobile terminal and a control method thereof according to an embodiment of the present disclosure, a user may specify a search object by simply pointing a camera without having to directly perform information search related to an object in reality, and quickly and easily acquire his or her desired information search result. Furthermore, a desired option may be accurately specified among a plurality of search options prior to image analysis on a subject, thereby eliminating errors due to automatic selection of a search object and a search option.

In addition, a desired search result may be acquired by selecting a desired search option from a preview image including a plurality of objects, and then selectively specifying any one object from the beginning or including all of the objects. Moreover, it may be possible to quickly change a target object or a search option itself even after checking the search result.

### BRIEF DESCRIPTION OF THE DRAWINGS

FIG. 1A is a block diagram for explaining the configuration of a mobile terminal associated with the present disclosure.
FIGS. 1B and 1C are conceptual views in which a mobile terminal associated with the present disclosure is seen from different directions.
FIGS. 2A, 2B, 2C and 2D are conceptual views for explaining a specific operation according to the execution of a subject information search mode in a mobile terminal associated with the present disclosure.
FIG. 3 is a representative flowchart for explaining a specific operation according to the execution of a subject information search mode in a mobile terminal associated with the present disclosure.
FIGS. 4A, 4B, 4C, 4D, 4E and 4F are exemplary views for explaining an operation of quickly specifying a desired object to execute an information search function when a plurality of objects are included in an object to be captured in a mobile terminal associated with the present disclosure.
FIGS. 5A, 5B, 5C and 5D are exemplary views for explaining an execution operation of an image search function related to an image of a subject in a mobile terminal associated with the present disclosure.
FIGS. 6, 7A, 7B, 7C, 7D, 8A, 8B, 8C, 8D, 9A, 9B, 9C, 9D, 10A and 10B are exemplary views for explaining an operation of extracting text included in an image of a subject to provide an additional function thereto in a mobile terminal associated with the present disclosure.
FIGS. 11A, 11B and 11C are exemplary views for explaining an operation of executing a QR scan function on an image of a subject in a mobile terminal associated with the present disclosure.

### DETAILED DESCRIPTION OF THE EMBODIMENTS

Hereinafter, the embodiments disclosed herein will be described in detail with reference to the accompanying drawings, and the same or similar elements are designated with the same numeral references regardless of the numerals in the drawings and their redundant description will be omitted. A suffix "module" and "unit" used for constituent elements disclosed in the following description is merely intended for easy description of the specification, and the suffix itself does not give any special meaning or function. In describing the present disclosure, moreover, the detailed description will be omitted when a specific description for publicly known technologies to which the invention pertains is judged to obscure the gist of the present disclosure. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms "include" or "has" used herein should be understood that they are intended to indicate the existence of a feature, a number, a step, a constituent element, a component or a combination thereof disclosed in the specification, and it may also be understood that the existence or additional possibility of one or more other features, numbers, steps, constituent elements, components or combinations thereof are not excluded in advance.

A mobile terminal described herein may include a mobile phone, a smart phone, a laptop computer, a digital broadcasting terminal, a personal digital assistant (PDA), a portable multimedia player (PMP), navigation, a slate PC, a tablet PC, an ultrabook, a wearable device (i.e., a watch-type terminal (smartwatch), glasses-type terminal (smart glasses), a head mounted display (HMD), and the like.

A mobile terminal described herein may include a mobile phone, a smart phone, a laptop computer, a digital broadcasting terminal, a personal digital assistant (PDA), a portable multimedia player (PMP), navigation, a slate PC, a tablet PC, an ultrabook, a wearable device (i.e., a watch-type terminal (smartwatch), glasses-type terminal (smart glasses), a head mounted display (HMD), and the like.

However, it may be easily understood by those skilled in the art that the configuration according to the exemplary embodiments of this specification can also be applied to stationary terminals such as digital TV, desktop computers, digital signages, and the like, excluding a case of being applicable only to the mobile terminals.

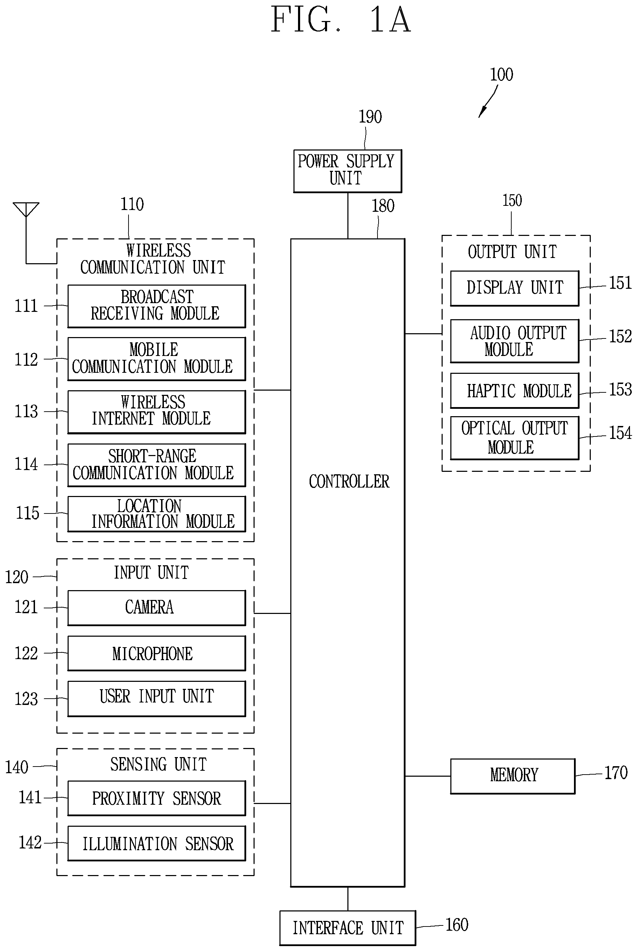

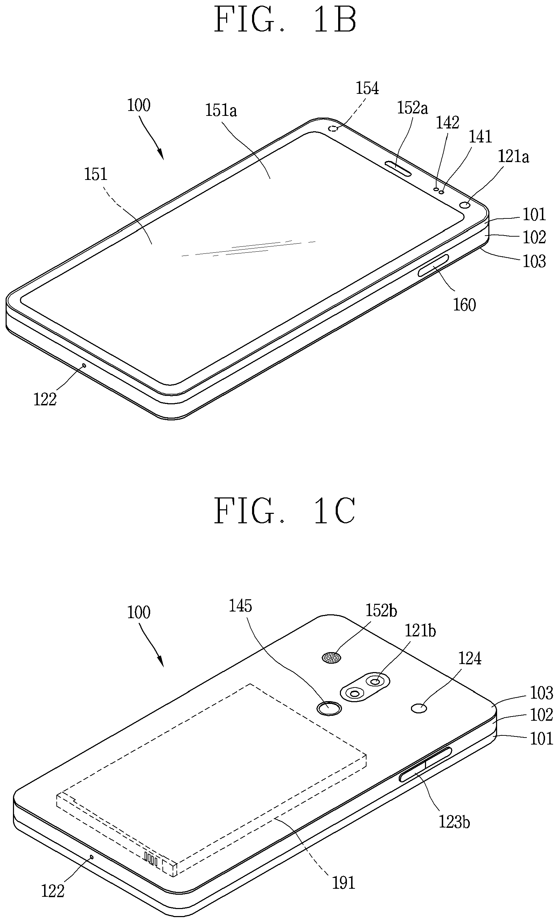

Referring to FIGS. 1A through 1C, FIG. 1A is a block diagram for explaining a mobile terminal associated with the present disclosure, and FIGS. 1B and 1C are conceptual views illustrating an example in which the mobile terminal associated with the present disclosure is seen from different directions.

The mobile terminal 100 may include components, such as a wireless communication unit 110, an input unit 120, a sensing unit 140, an output unit 150, an interface unit 160, a memory 170, a controller 180, a power supply unit 190 and the like. The components shown in FIG. 1A are not essential for implementing a mobile terminal, and thus the mobile terminal described herein may have more or fewer components than those listed above.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and an external server. In addition, the wireless communication unit 110 may include one or more modules for connecting the mobile terminal 100 to one or more networks.

The wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). On the other hand, the mobile terminal disclosed herein may utilize information in such a manner of combining information sensed by at least two sensors of those sensors.

The output unit 150 may be configured to output an audio signal, a video signal or a tactile signal. The output unit 150 may include a display module 151, an audio output module 152, a haptic module 153, an optical output unit 154 and the like. The display module 151 may be inter-layered or integrated with a touch sensor to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

In addition, the memory 170 stores data that support various functions of the mobile terminal 100. The memory 170 is typically implemented to store data to support various functions or features of the mobile terminal 100. For instance, the memory 170 may be configured to store application programs executed in the mobile terminal 100, data or instructions for operations of the mobile terminal 100, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The controller 180 may typically control an overall operation of the mobile terminal 100 in addition to the operations associated with the application programs. The controller 180 may provide or process information or functions appropriate for a user in a manner of processing signals, data, information and the like, which are input or output by the aforementioned components, or activating the application programs stored in the memory 170.

Furthermore, the controller 180 may control at least part of the components illustrated in FIG. 1A, in order to drive the application programs stored in the memory 170. In addition, the controller 180 may drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Furthermore, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various exemplary embodiments implemented by the mobile terminal 100 having the configuration.

First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and/or a terrestrial channel. At least two broadcast receiving modules 111 may be provided in the mobile terminal 100 to simultaneously receive at least two broadcast channels or switch the broadcast channels.

The mobile communication module 112 may transmit/receive wireless signals to/from at least one of network entities, for example, a base station, an external terminal, a server, and the like, on a mobile communication network, which is constructed according to technical standards or transmission methods for mobile communications (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), Long Term Evolution-Advanced (LTE-A), etc.)

Here, the wireless signals may include audio call signal, video (telephony) call signal, or various formats of data according to transmission/reception of text/multimedia messages.

The wireless Internet module 113 refers to a module for supporting wireless Internet access, and may be built-in or externally installed on the mobile terminal 100. The wireless Internet module 113 may transmit and/or receive wireless signals via communication networks according to wireless Internet technologies.

Examples of such wireless Internet access may include Wireless LAN (WLAN), Wireless-Fidelity (Wi-Fi), Wireless Fidelity Direct (Wi-Fi Direct), Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), LTE (Long Term Evolution), LTE-A (Long Term Evolution-Advanced), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LTE, LTE-A and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks. The short-range communication module 114 denotes a module for short-range communications.

Here, the another mobile terminal 100 may be a wearable device, for example, a smart watch, smart glasses or a head mounted display (HMD), which is able to exchange data with the mobile terminal 100 (or to link data with the mobile terminal 100). The short-range communication module 114 may sense (recognize) a wearable device, which is able to communicate with the mobile terminal), near the mobile terminal 100. In addition, when the sensed wearable device is a device which is authenticated to communicate with the mobile terminal 100 according to the present disclosure, the controller 180 may transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a WiFi module, or both. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information associated with a wireless access point (AP) which transmits or receives a wireless signal to or from the Wi-Fi module. According to the need, the location information module 115 may perform any function of the other modules of the wireless communication unit 110 to obtain data on the location of the mobile terminal. As a module used to acquire the location (or current location) of the mobile terminal, the location information module 115 may not be necessarily limited to a module for directly calculating or acquiring the location of the mobile terminal.

The input unit 120 may be configured to provide an audio or video signal (or information) input to the mobile terminal or information input by a user to the mobile terminal. For the input of the audio information, the mobile terminal 100 may include one or a plurality of cameras 121. The camera 121 processes a image frame, such as still picture or video, acquired by an image sensor in a video phone call or image capturing mode. The processed image frames may be displayed on the display module 151. On the other hand, the plurality of cameras 121 disposed in the mobile terminal 100 may be arranged in a matrix configuration. By use of the cameras 121 having the matrix configuration, a plurality of image information having various angles or focal points may be input into the mobile terminal 100. As another example, the cameras 121 may be located in a stereoscopic arrangement to acquire left and right images for implementing a stereoscopic image.

The microphone 122 may process an external audio signal into electric audio data. The processed audio data may be utilized in various manners according to a function being executed in the mobile terminal 100 (or an application program being executed). On the other hand, the microphone 122 may include assorted noise removing algorithms to remove noise generated in the course of receiving the external audio signal.

The user input unit 123 may receive information input by a user. When information is input through the user input unit 123, the controller 180 may control an operation of the mobile terminal 100 to correspond to the input information. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

On the other hand, the sensing unit 140 may sense at least one of internal information of the mobile terminal, surrounding environment information of the mobile terminal and user information, and generate a sensing signal corresponding to it. The controller 180 may control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen.

The proximity sensor 141 may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this case, the touch screen (touch sensor) may also be categorized as a proximity sensor.

On the other hand, for the sake of brief explanation, a behavior in which the pointer is positioned to be proximate onto the touch screen without contact will be referred to as "proximity touch," whereas a behavior in which the pointer substantially comes into contact with the touch screen will be referred to as "contact touch." For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). On the other hand, the controller 180 may process data (or information) corresponding to the proximity touches and the proximity touch patterns sensed by the proximity sensor 141, and output visual information corresponding to the process data on the touch screen. In addition, the controller 180 may control the mobile terminal 100 to execute different operations or process different data (or information) according to whether a touch with respect to the same point on the touch screen is either a proximity touch or a contact touch.

A touch sensor can sense a touch applied to the touch screen, such as display module 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display module 151 or a capacitance occurring from a specific part of the display module 151, into electric input signals. The touch sensor may be configured to detect a position, an area where a touch object applying a touch onto the touch screen is touched on the touch sensor, a pressure at the time of touch, a capacitance at the time of touch, and the like. Here, the touch object body may be a finger, a touch pen or stylus pen, a pointer, or the like as an object through which a touch is applied to the touch sensor.

When a touch input is sensed by a touch sensor, corresponding signals may be transmitted to a touch controller. The touch controller may process the received signals, and then transmit corresponding data to the controller 180. Accordingly, the controller 180 may sense which region of the display module 151 has been touched. Here, the touch controller may be a component separate from the controller 180 or the controller 180 itself.

On the other hand, the controller 180 may execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swype touch, a hovering touch, and the like.

An ultrasonic sensor may be configured to recognize position information relating to a sensing object by using ultrasonic waves. Meanwhile, the controller 180 may calculate the location of a wave generating source through information sensed from the optical sensor and the plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor. The camera sensor may include at least one of a photo sensor (or image sensor) and a laser sensor.

The camera 121 and the laser sensor may be combined with each other to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display module 151 may display (output) information processed in the mobile terminal 100. For example, the display module 151 may display execution screen information of an application program driven in the mobile terminal 100 or user interface (Ul) and graphic user interface (GUI) information in response to the execution screen information.

Furthermore, the display module 151 may also be implemented as a stereoscopic display module for displaying stereoscopic images.

The stereoscopic display module may employ a stereoscopic display scheme such as stereoscopic scheme (a glass scheme), an auto-stereoscopic scheme (glassless scheme), a projection scheme (holographic scheme), or the like.

The audio output unit 152 may output audio data received from the wireless communication unit 110 or stored in the memory 160 in a call signal reception mode, a call mode, a record mode, a voice recognition mode, a broadcast reception mode, and the like. Also, the audio output module 152 may also provide audible output signals associated with a particular function (e.g., a call signal reception sound, a message reception sound, etc.) carried out by the mobile terminal 100. The audio output module 152 may include a receiver, a speaker, a buzzer or the like.

A haptic module 153 may generate various tactile effects the that user may feel. Atypical example of the haptic effect that is generated by the haptic module 153 is vibration. Strength, pattern and the like of the vibration generated by the haptic module 153 may be controllable by a user selection or setting of the controller. For example, the haptic module 153 may output different vibrations in a combined or sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. A device having the identification module (hereinafter, an "identification device") may be fabricated in the form of a smart card. Accordingly, the identifying device may be connected with the terminal 100 via the interface unit 160.

Furthermore, when the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Such various command signals or power inputted from the cradle may operate as signals for recognizing that the mobile terminal 100 has accurately been mounted to the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 may typically control the general operations of the mobile terminal 100. For example, the controller 180 may execute or release a locked state for restricting a user from inputting a control command with respect to applications when a state of the mobile terminal meets a preset condition.

Furthermore, the controller 180 may also perform controlling and processing associated with voice calls, data communications, video calls, and the like, or perform pattern recognition processing to recognize a handwriting input or a picture drawing input performed on the touch screen as characters or images, respectively. In addition, the controller 180 may control one or combination of those components in order to implement various exemplary embodiment disclosed herein on the mobile terminal 100.

The power supply unit 190 may receive external power or internal power and supply appropriate power required for operating respective elements and components included in the mobile terminal 100 under the control of the controller 180. The power supply unit 190 may include a battery, which is typically rechargeable or be detachably coupled to the terminal body for charging.

Furthermore, the power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable or its similar medium using, for example, software, hardware, or any combination thereof.

Referring to FIGS. 1B and 1C, the mobile terminal 100 disclosed herein may be provided with a bar-type terminal body. However, the present disclosure may not be necessarily limited to this, and may be also applicable to various structures such as a watch type, a clip type, a glasses type, a folder type in which two or more bodies are coupled to each other in a relatively movable manner, a slide type, a swing type, a swivel type, and the like. The present disclosure relates to a specific type of mobile terminal, but the description of a specific type of mobile terminal may be also applicable to another type of mobile terminal in general.

Here, the terminal body may be understood as a conception which indicates the mobile terminal 100 as at least one assembly.

The mobile terminal 100 may include a case (for example, a frame, a housing, a cover, etc.) constituting the appearance thereof. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display module 151 may be disposed on a front surface of the terminal body to output information. As illustrated, a window 151a of the display module 151 may be mounted to the front case 101 so as to form the front surface of the terminal body together with the front case 101.

In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. On the other hand, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

Unlike the example which the plurality of cases form an inner space for accommodating such various components, the mobile terminal 100 may be configured such that one case forms the inner space. In this case, the mobile terminal 100 with a unibody in which synthetic resin or metal is extended from a lateral surface to a rear surface may be implemented.

On the other hand, the mobile terminal 100 may include a waterproofing unit (not shown) for preventing an introduction of water into the terminal body. For example, the waterproof portion may include a waterproof member provided between the window 151a and the front case 101, between the front case 101 and the rear case 102, or between the rear case 102 and the back cover 103, to hermetically seal an inner space when those cases are coupled to each other.

The mobile terminal 100 may include a display module 151, first and second audio output modules 152a and 152b, a proximity sensor 141, an illumination sensor 152, an optical output module 154, first and second cameras 121a and 121b, first and second manipulation units 123a and 123b, a microphone 122, an interface unit 160 and the like.

Hereinafter, description will be given of an exemplary mobile terminal 100 that the display module 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIGS. 1B and 1C.

However, the foregoing configuration may not be necessarily limited to the arrangement. The foregoing configuration may be excluded, substituted or disposed on another surface if necessary. For example, the first manipulation unit 123a may not be disposed on the front surface of the terminal body, and the second audio output module 152b may be disposed on the side surface other than the rear surface of the terminal body.

The display module 151 displays (outputs) information processed by the mobile terminal 100. For example, the display module 151 may display execution screen information of an application program driven in the mobile terminal 100 or user interface (Ul) and graphic user interface (GUI) information in response to the execution screen information.

The display module 151 may include at least one of a liquid crystal display (LCD), a thin film transistor-LCD (TFT-LCD), an organic light-emitting diode (OLED), a flexible display, a three-dimensional (3D) display and an e-ink display.

The display module 151 may be implemented in two or more in number according to a configured aspect of the mobile terminal 100. For instance, a plurality of the display modules 151 may be arranged on one surface to be spaced apart from or integrated with each other, or may be arranged on different surfaces.

The display module 151 may include a touch sensor which senses a touch onto the display module so as to receive a control command in a touching manner. When a touch is input to the display module 151, the touch sensor may be configured to sense this touch and the controller 180 may generate a control command corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display module 151 may form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a receiver for transferring voice sounds to the user's ear or a loud speaker for outputting various alarm sounds or multimedia reproduction sounds.

The window 151a of the display module 151 may include a sound hole for emitting sounds generated from the first audio output module 152a. Here, the present disclosure may not be limited to this. It may also be configured such that the sounds are released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event check is sensed, the controller 180 may control the optical output unit 154 to end the output of light.

The first camera 121a may process video frames such as still or moving images acquired by the image sensor in a video call mode or a capture mode. The processed video frames may be displayed on the display module 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may employ any method if it is a tactile manner allowing the user to perform manipulation with a tactile feeling such as touch, push, scroll or the like. In addition, the first and second manipulation units 123a and 123b may also employ a method of allowing the user to perform manipulation without a tactile feeling through a proximity touch, a hovering touch, or the like.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display module 151, or the like.

On the other hand, as another example of the user input unit 123, a rear input unit (not shown) may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display module 151, or the like. The rear input unit may be implemented into a form allowing a touch input, a push input or a combination thereof.

The rear input unit may be disposed to overlap with the display module 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display module 151 may be implemented to have a larger screen.

On the other hand, the mobile terminal 100 may include a fingerprint recognition sensor for recognizing a user's fingerprint, and the controller 180 may use fingerprint information sensed through the finger recognition sensor as an authentication means. The finger recognition sensor may be integrated into the display module 151 or the user input unit 123.

The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a.

The second camera 121b may include a plurality of lenses arranged along at least one line. The plurality of lenses may also be arranged in a matrix configuration. The cameras may be referred to as an 'array camera.' When the second camera 121b is implemented as the array camera, images may be captured in various manners using the plurality of lenses and images with better qualities may be obtained.

A flash 124 may be disposed adjacent to the second camera 121b. When an image of a subject is captured with the camera 121b, the flash 124 may illuminate the subject.

The second audio output module 152b may further be disposed on the terminal body. The second audio output module 152b may implement a stereo function in conjunction with the first audio output module 152a, and may be also used to implement a speakerphone mode during a call.

At least one antenna for wireless communication may be disposed on the terminal body. The antenna may be installed in the terminal body or formed on the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

A power supply unit 190 (refer to FIG. 1A) for supplying power to the mobile terminal 100 may be disposed on the terminal body. The power supply unit 190 may include a batter 191 which is mounted in the terminal body or detachably coupled to an outside of the terminal body.

The battery 191 may receive power via a power source cable connected to the interface unit 160. Furthermore, the battery 191 may be (re)chargeable in a wireless manner using a wireless charger. The wireless charging may be implemented by magnetic induction or electromagnetic resonance.

On the other hand, the drawing illustrates that the back cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may link with the display module 151 to extend the function of the mobile terminal 100. Another example of the accessory may be a touch pen for assisting or extending a touch input onto a touch screen.

The mobile terminal 100 according to an embodiment of the present disclosure described above may include the camera 121 for capturing an image, and a preview image for capturing is displayed on the display module 151 when a camera application is executed. Then, when it is sensed that the camera operation has entered an information search mode, the controller 180 may provide a plurality of search options for a subject.

Then, when any one of the presented plurality of search options is sensed, and then a touch input is applied to the preview image, the controller 180 may execute a capture command for capturing a subject including an object to which the selected search option is applied. Then, the controller 180 may display an image of the captured subject on the display module 151 along with an application screen of the selected search option.

Accordingly, the user may easily and quickly acquire a desired information search result by simply capturing a subject without having to directly perform information search related to an object in reality. Furthermore, a desired option may be accurately specified among a plurality of search options prior to image analysis on a subject, thereby eliminating errors due to automatic selection of a search object and a search option.

Hereinafter, the information search mode described in the present disclosure denotes an operation mode capable of performing various information search on a current screen without executing an additional application for information included in all or a specific part of the subject.

Furthermore, the information search mode may denote an operation mode capable of performing various information search functions on a current screen without loading a pre-stored image and executing an additional application. In other words, the present disclosure may be applied not only to a preview image but also similarly to an image previously stored in the terminal.

In addition, the plurality of search options for the subject, as a plurality of search items applicable to information included in the subject, may all include various search options provided by a typical web search page, such as image search, shopping search, web search, dictionary search, translation search, news search, map search, content search, and book search, and the like.

On the other hand, the plurality of search options for the subject may be the same regardless of the subject or image, and for another example, the subject or image may be different depending on the location or time at which the subject or image is captured.

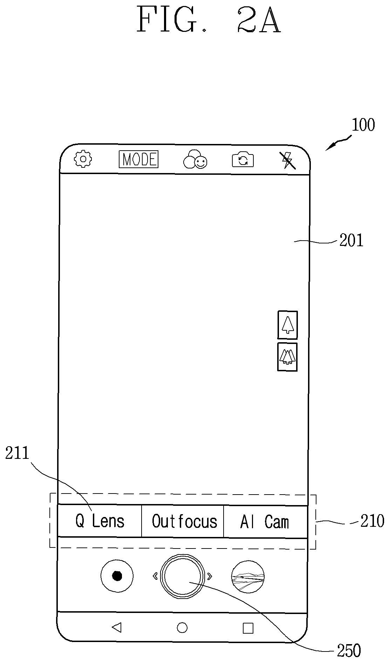

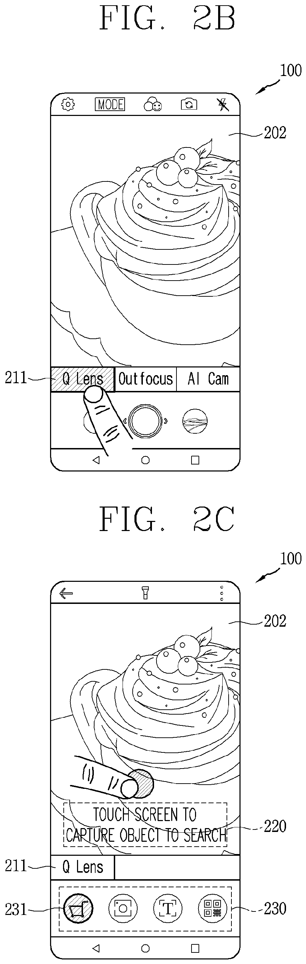

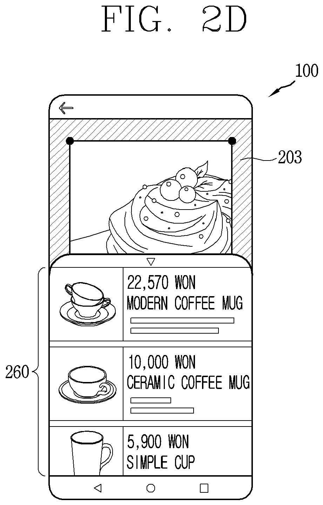

Hereinafter, with reference to FIGS. 2A, 2B, 2C and 2D, a specific operation associated with the execution of an information search mode of a subject according to the present disclosure will be described.

First, referring to FIG. 2A, a preview image 201 displayed according to the execution of a camera application in the mobile terminal 100 according to the present disclosure is shown.

At this time, a home touch button including a back icon is provided at the bottom of the display module 151 as a default. Furthermore, a frequently used camera setting menu is displayed on the top of the display module 151 as a default. In addition, in order to secure the fingering distance, a function icon 211 for entering an information search mode according to the present disclosure may be presented by being included in a USP menu bar 210 at the top of a capture button 250, that is, directly under the preview image 201. However, this is merely an example, and the structure in which the USP menu bar 210 is disposed on the side or the top of the display module 151 may also be possible.

Subsequently, referring to FIG. 2B, when a touch is applied to the function icon 211 for entering the information search mode according to the present disclosure while a preview image 202 is displayed, the mobile terminal enters an operation mode for executing a search function on information included in the preview image 202 while maintaining the preview image 202.

Accordingly, as illustrated in FIG. 2C, a user interface 230 including a plurality of search options for a subject included in the preview image 202 may be displayed at a location where the capture button 250 was located.

Here, the plurality of search options may be representative search options presented as defaults regardless of a subject viewed through the camera 121. For example, as shown in FIG. 2C, a shopping search option, an image search option, a text scan option, and a QR scan option may be provided as default menu icons in the information search mode in the user interface 230.

The user may select a desired specific search option, for example, a shopping search option 231 from various search options presented in the user interface 230 through a touch input.

However, in one example, the selection of the specific search option may be performed without any user input. For example, the shopping search option 231 or another specific search option may be automatically selected as an initial search option. In this case, when the automatically selected search option matches the desired search option, the user may skip the selection process of the search option to perform the next step.

Then, guide information 220 for inducing the selection of an object to which the selected shopping search option 231 is applied is displayed in an area, for example, at the bottom of the preview image 202. In other words, a specific search object is specified after the search option is specified first. In general, when searching through a web page, a search is executed by entering a search keyword, and then a specific search option is selected to acquire a specific search result. To this end, at least initially, the range of DB used for searching is applied to all options such as image, shopping, document, dictionary, video, news, and the like. Even if the user only wanted to perform an image search clearly from the beginning, he or she had to check the entire search results and then select the image search option.

However, in the present disclosure, it may be implemented to first select a specific search option such as shopping or image, and then select a specific search object, that is, a specific object within the preview image 202, thereby allowing the user to more directly reach desired results, and minimizing resource loss rather than providing a full range of search results.

In addition, without entering a search term, the search object may be limited by simply pointing an object in real through the camera, and a search object may be more reliably specified only by touching a specific object on the preview image 202 according to the guide information 220 illustrated in FIG. 2C.

For example, when a single touch is applied to a specific object in FIG. 2C, any one object corresponding to a touch point to which a single touch is applied is specified among a plurality of divisible objects in the preview image 202. However, the single touch is an example, and may also be replaced by another type of touch such as a double touch or a method of drawing a line along an outline of the object.

Subsequently, in FIG. 2C, when a touch input is applied to a "cup portion" of a specific object in the preview image 202, for example, "a cake in a cup", image analysis for the "cup portion" in the preview image 202 is carried out. Therefore, in the present disclosure, image analysis does not need to be performed until a search option is specified and an object to be searched is selected, thereby reducing a load due to unnecessary image analysis. In addition, image analysis for search is also performed only on the selected portion rather than the entire subject.

In one example, when selecting an object in the preview image 202, a predetermined graphic object that visually recognizes the selection may be displayed. Furthermore, in another example, a guide image may be displayed along an outline of the selected object, and implemented to recognize that the relevant object is finally selected through a feedback input to the guide image.

On the other hand, a touch on the preview image 202 is also performed as an input of a capture signal. In other words, using a touch signal as an input signal, the selection of an object and capturing on a subject are carried out at the same time.

When the object is a portion (e.g., a cup portion) of the subject (e.g., a cake in a cup) as shown in FIG. 2C, an image of the captured subject and an object to which a shopping search option is applied may be different.

Subsequent to capturing a subject and selecting an object, when image analysis for the selected object is completed, a shopping search is executed based on information (e.g., a shape of the cup, a material of the cup, etc.) corresponding to the analysis result. While the shopping search is being executed, a loading screen may be displayed at the bottom of the preview image 202.

When a predetermined time period has elapsed, an application screen 260 of the shopping search for the selected object is displayed along with the image 203 of the captured subject.

The application screen 260 may be in the form of a bottom sheet withdrawn from the bottom of the display module 151, as shown in FIG. 2D. Accordingly, the bottom sheet may be drawn in while moving back to the bottom of the display module 151 or drawn out again while moving upward according to a flicking touch input applied to the application screen 260 in a vertical direction. Furthermore, the application screen 260 is displayed by overlapping with a portion of the image 203 of the captured subject according to the drawn-out.

In addition, a plurality of items corresponding to a result of the shopping search are displayed on the application screen 260, and image and product information (for example, a seller, a product price, etc.) is included in each item. At this time, when a flicking touch input is applied to the application screen 260 in a vertical or horizontal direction, the items may be scrolled to display some other items or to switch to another page including other items.

When the user selects any one item from the application screen 260, a web page shortcut linked to the selected item is executed. Accordingly, the captured subject image 203 is immediately switched to a specific web page screen.

As described above, in the present disclosure, a search object may be specified by simply pointing the camera, and a specific search option may be first selected and then an object to be searched may be selected at the same time as capturing, and thus there is no need to additionally execute an application for search, and a user's desired search option may be immediately applied to a specific object.

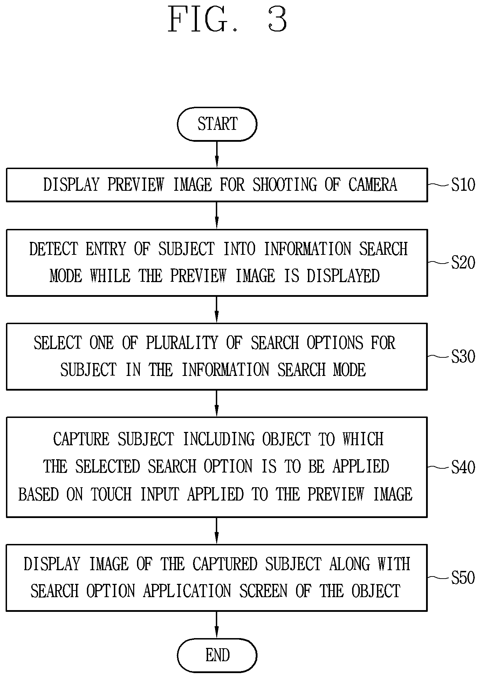

Hereinafter, FIG. 3 is a representative flowchart for explaining a specific operation according to the execution of a subject information search mode in a mobile terminal associated with the present disclosure.

First, a preview image for the shooting of a camera is displayed on the display module 151 of the mobile terminal 100 (S10).

While the preview image is displayed, the controller 180 may detect the entry of a subject into the information search mode (S20). The information search mode may be performed through an input signal by a user or a selection signal for a request to prevent unnecessary programs from continuously running in the background.

Next, in the information search mode, the selection of one of a plurality of search options for the subject is sensed (S30).

The selection of any one of the plurality of search options may be made through a user input. For example, when a touch input is applied to any one of the plurality of search option items presented through a user interface (UI), it may be recognized that the relevant item is selected. As described above, a search range is clearly specified every time through the user input, and different search options may be selected for the same subject, for example.

In another example, any one of the plurality of search options may be selected based on sensor values sensed through various sensors provided in the mobile terminal 100 and location information or time information collected by the mobile terminal 100. In this case, an image analysis result of the subject may be additionally used.

Furthermore, in still another example, the plurality of search options themselves may be presented differently according to the subject or the user's preference. In this case, the selection of any one of the plurality of search options may affect the type and arrangement of the plurality of search options in the future. In other words, using a selection from the plurality of search options as a feedback input value, the plurality of search options presented next may be controlled.

In addition, the plurality of search options may be scrolled according to an additional input, for example, a horizontal or vertical flicking input, to provide more search options.

Any one of the search options is specified as described above, and then a subject including an object to which the search option selected in step S30 is applied is captured based on a touch input applied to the preview image (S40).

To this end, the controller 180 may transmit a capture command to the camera 121 at a time point when a touch input is applied to the preview image while at the same time performing image analysis on an object to which the selected search option is applied.

Then, an image of the captured subject is displayed on the display module 151 along with an object search option application screen (S50). At this time, the captured subject and the object to which the search option is applied may be different from each other, or either one of them may have a partial relationship to the other one.

When any one search result is selected on the search option application screen, it may be immediately moved to its related screen. Alternatively, after the search option application screen is displayed, a search option or an object to be searched may be changed and searched again through a back button.

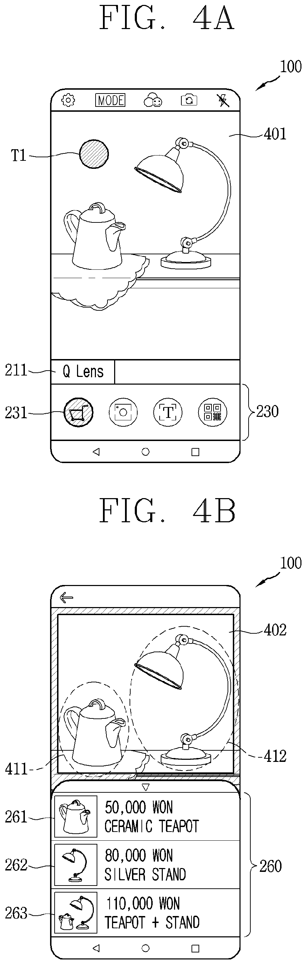

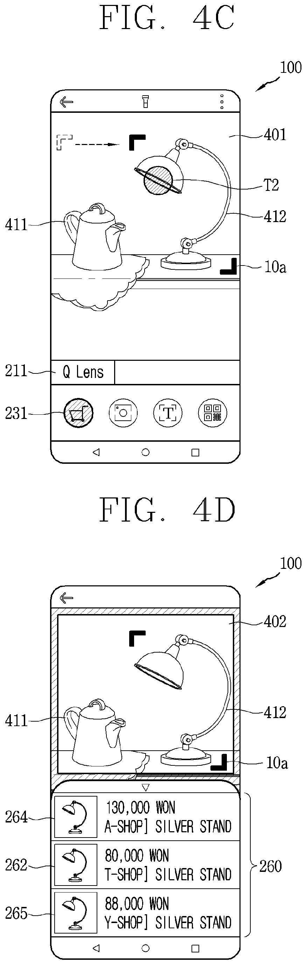

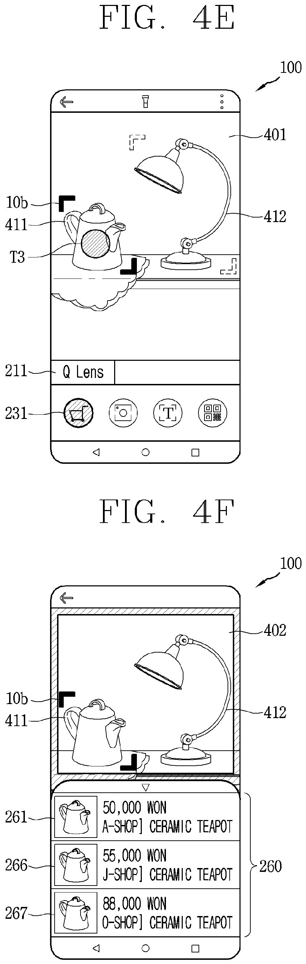

Hereinafter, FIGS. 4A, 4B, 4C, 4D, 4E and 4F illustrate examples of quickly specifying or changing a desired object to execute an information search function when a plurality of objects are included in an object to be captured.

First, referring to FIG. 4A, when a plurality of objects, for example, a kettle and a lamp, are included in a preview image 401 to be captured, the selection range of an object varies according to information displayed at a touch point of a touch input applied to the preview image 401.

Specifically, when a shopping search option is selected, and then a touch input (T1) is applied to a background region of the preview image 401, the shopping search option is applied to all objects included in the preview image 401. To this end, the controller 180 may distinguish and recognize whether the information displayed at a point where the touch input is applied is a background image or a specific object image. In other words, when a location applied to the touch point belongs to a background image, the background image is not recognized as an object, but is processed that all the objects are selected.

In this case, as shown in FIG. 4B, a shopping search is executed for all of a plurality of objects (e.g., kettle, lamp). At this time, guide images may be displayed on the objects 411, 412 selected from the captured image 402.

At this time, not only an item 261 of the shopping search result for the first object 411 and an item 262 of the shopping search result for the second object 412 but also an item 263 of the shopping search result including all the plurality of objects may be provided on the application screen 260.

When a back execution command is input while the application screen 260 of the selected search option is displayed, it may be switched to a screen for changing an object to which the selected search option is to be applied.

Accordingly, as illustrated in FIG. 4C, the user interface 230 displayed with a plurality of search options is displayed again along with the preview image 401. Here, the user may apply a touch input to another object included in the preview image 401 to change an object to which the search option is applied. Alternatively, another search option may also be selected from the user interface 230. Alternately, it may be possible to change both the search option and object.

When a touch input (T2) is applied to a "lamp" 412 in the preview image 401 of FIG. 4C, the shopping search object is changed from "lamp, kettle, lamp + kettle" to "lamp". At this time, a guide image 10a changed to visually recognize the changed object is displayed.

Then, when a predetermined time has elapsed, as illustrated in FIG. 4D, only items 264, 262, 265 of the shopping search result related to the "lamp" are displayed on the application screen 260 of the search option.

To this end, when a touch input is applied to only one object in a preview image including a plurality of objects, the controller 180 limits the application of the selected search option to the remaining objects distinguished from it. For example, in FIG. 4D, it may be seen that the shopping search option is not applied to the "kettle" 411.

Then, when it is desired to change the search object from the "lamp" to the "kettle" 411 again, it may be achieved by selecting a button for generating a back execution command, then applying a touch input (T3) to the "kettle" in the preview image 401 of FIG. 4E.

As described above, according to a change of the search object, the location of the guide image 10b is also changed to be different from the previous one. As a result, as illustrated in FIG. 4F, only items 261, 266, 267 of the shopping search result related to the "kettle" are displayed on the application screen 260 of the search option.

As described above, in the present disclosure, a desired search result may be acquired by selecting a desired search option from a preview image including a plurality of objects, and then selectively specifying any one object from the beginning or including all of the objects. Moreover, it may be possible to quickly change a target object or a search option itself after checking the search result.

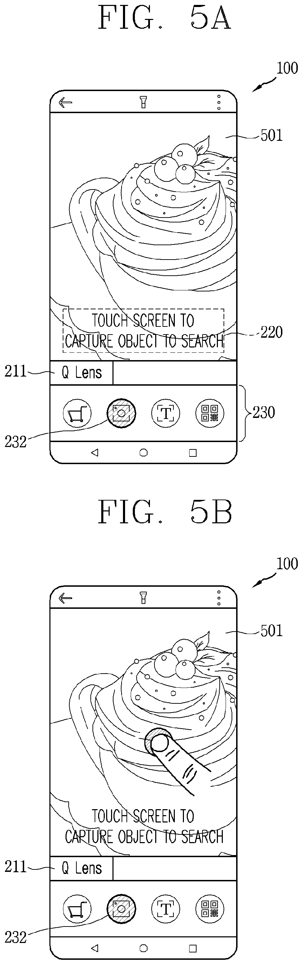

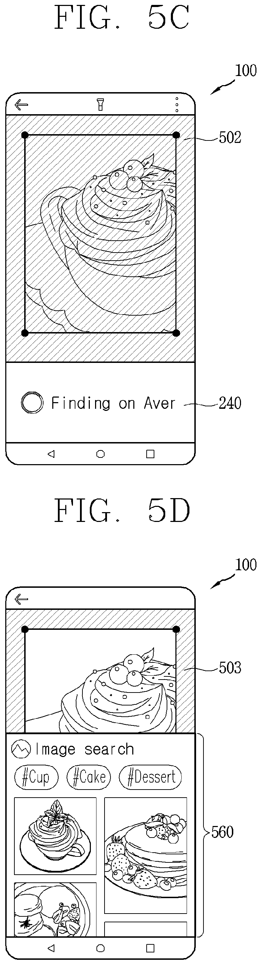

Hereinafter, FIGS. 5A, 5B, 5C and 5D are exemplary views for explaining a specific operation of executing an image search function on a subject.

First, referring to FIG. 5A, when an image search option 232 is selected in the information search mode, guide information 220 for inducing the selection of an object to be captured to search for an image is displayed at the bottom of the preview image 501.

In response to the guide information 220, when a touch input is applied to an object in the preview image 501, for example, "a cake in a cup", an image search for the relevant object is performed at the same time as capturing. At this time, the captured image is stored in the memory 160 of the mobile terminal, for example.

Then, as illustrated in FIG. 5C, the captured image 502 is displayed first, and a loading screen 240 is provided at the bottom while image analysis and image search on the object are performed. At this time, the captured image 502 may be displayed with an outline image indicating a portion where object recognition is actually performed for the image search.

Next, as shown in FIG. 5D, an application screen 560 that provides an image search result related to "a cake in a cup" is displayed while overlapping with at least a portion of the captured image 502. The user may select one of a plurality of images provided on the application screen 560 to view the relevant image in an enlarged manner or directly access a page related to the relevant image.

As described above, in the present disclosure, the function may be applied in an extended manner to an area of search beyond capture through the preview image of the camera 121, and in particular, a customized information search may be possible by selecting a desired search option first, and then using information possessed by the preview image at a faster speed.

Hereinafter, specific examples related to a case where information possessed by the preview image includes text will be described.

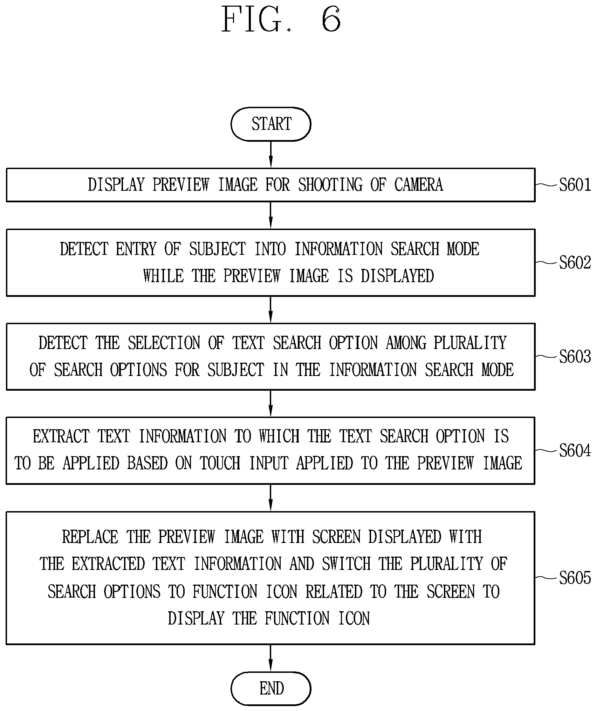

FIGS. 6, 7A, 7B, 7C, 7D, 8A, 8B, 8C, 8D, 9A, 9B, 9C, 9D, 10A and 10B illustrate operations of extracting text included in an image of a subject to provide an additional function thereto in a mobile terminal associated with the present disclosure.

First, FIG. 6 is a flowchart for explaining an operation of executing an information search mode of a subject according to the present disclosure to extract text included in a preview image and provide an additional function related thereto.

In FIG. 6, first, a preview image for the shooting of a camera is displayed on the display module 151 of the mobile terminal 100 (S601). While the preview image is displayed, the entry of a subject into the information search mode may be detected (S602). In the information search mode, the selection of a text search option among a plurality of search options for a subject is detected (S603).

At this time, the selection of the text search option may be made through an explicit user input or initial setting. For example, a text search option may be selected by applying a touch input to a text search option among a plurality of search options presented on the display module 151. Alternatively, when the initial setting is set as a text search option from the beginning or the search option that has been lately carried out is a text search option, it may be recognized that the text search option is selected exceptionally without explicit user's selection.

In another example, when text information is detected in a subject image, guide information for inducing the selection of a text search option among the plurality of search options, for example, a highlighting effect output or the like, may be displayed. However, even at this time, the final selection of the text search option may be made by the user.

Subsequently, text information to which the selected text search option is to be applied is extracted based on a touch input applied to the preview image (S604).

At this time, only part of text included in the preview image may be selected. This may be achieved through a process similar to selecting any one from a preview image including a plurality of objects described above.

When text information is extracted, the preview image is replaced with an extraction screen displayed with the extracted text information. In other words, the extracted text information is reconstructed and displayed in a predetermined font and font size, other than the preview image itself. Furthermore, the plurality of search options that have been displayed are switched to a function icon related to the extraction screen and displayed (S605).

Here, the function related to the extraction screen is a function related to the processing of text information included in the extraction screen, and does not simply denote storage, transmission, and editing. In other words, a storage location and a storage method, such as saving a contact, saving a memo, saving a PDF, or the like, may be provided according to the attributes of text information included in the extraction screen and the user's usage habits.

The user may quickly process text information included in the extraction screen in a desired manner by selecting any one of the displayed function icons.

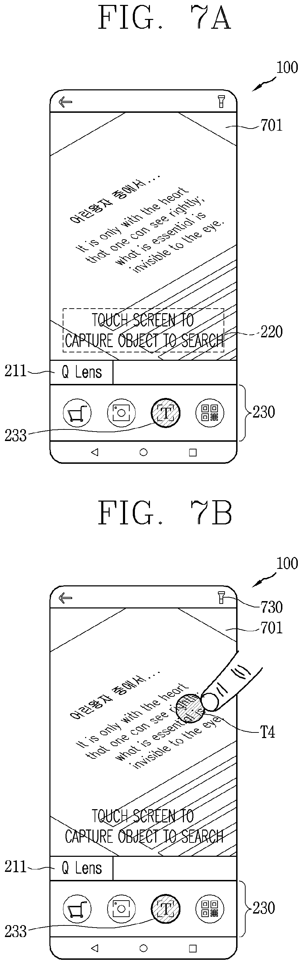

FIGS. 7A through 7D show examples of providing a result of applying a translation function to text information extracted from a preview image.

In FIG. 7A, when a document including text information is pointed by the camera, and accordingly, the selection of a text search option 233 among the plurality of search options is detected while the preview image 701 is displayed, guide information 220 for inducing the selection a text area to which the text search option is to be applied is displayed.

Next, as illustrated in FIG. 7B, when a touch input (T4) is applied to a specific text area in the displayed preview image 701, text displayed in the relevant area is extracted to recognize the content. At this time, in order to increase the text extraction and recognition rate, a flashlight mode 730 may be automatically activated in consideration of a current battery level.

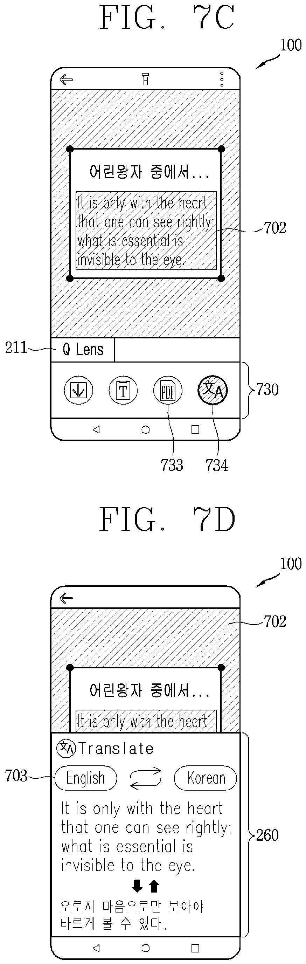

When a predetermined time has elapsed, as illustrated in FIG. 7C, an extraction screen 702 configured with text information extracted and recognized from the selected text area is displayed by replacing the preview image 701. In addition, in FIG. 7B, a plurality of search options displayed at the bottom of the display module 151 are switched to function icons 730 related to text information included in the extraction screen 702.

At this time, the function icons 730 may be determined differently according to the attributes and contents of text information included in the extraction screen 702. For example, in the case of a "document" including a "foreign language" as shown in FIG. 7B, a PDF format storage icon 733 and a translation function icon 734 may be provided as function icons 730 related to text information.

In addition, in one example, information to which an additional function is to be applied may be further restricted by controlling the size/location of a guide image displayed on a boundary line of the extraction screen 702 through a drag touch input, or selecting a specific word, line, or a plurality of words/lines included in the extraction screen 702. In this case, the function icons 730 that have already been displayed may vary according to the attributes and contents of the restricted information.

Meanwhile, in FIG. 7C, when the translation icon 734 is selected, a translation function corresponding to the selected translation icon 734 is executed on text information of the extraction screen 702.

Accordingly, as illustrated in FIG. 7D, a translation screen 703 translated from "English" included in the extraction screen 702 to "Korean" is drawn out from the bottom of the display module 151 toward the top as an application screen 260 in the form of a bottom sheet. The translation screen 703 is provided with a translation result along with a user interface capable of selecting a translation language.

In addition, in one example, when a touch input is applied to an application screen of a function corresponding to a function icon, that is, the translation screen 703, information displayed on the application screen may be saved along with the extraction screen. Specifically, when a touch input is applied to the translation screen 703 in FIG. 7D, a pre-translation extraction screen 702 and the translation screen 703 may be saved at the same time.

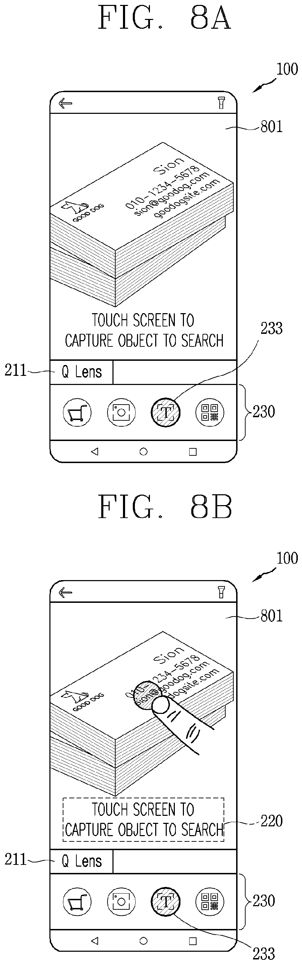

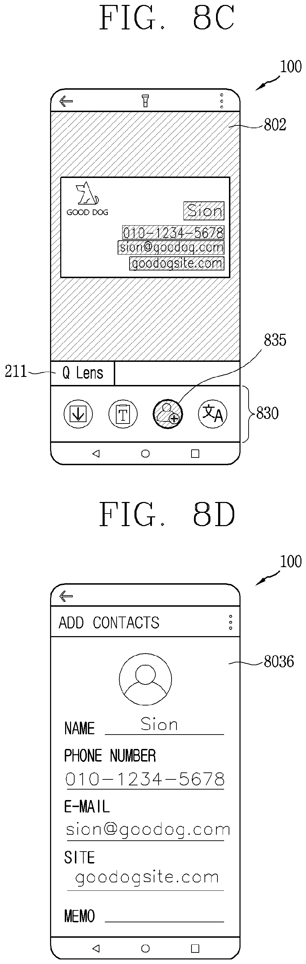

FIGS. 8A through 8D show examples of providing a result of applying a contact save function to text information extracted from a preview image.

For example, as illustrated in FIG. 8A, a business card including a contact name and a name may be displayed as a preview image 801. Subsequently, when a text search option 233 is selected, and then a touch input is applied to an area having a business card as shown in FIG. 8B, text information included in the business card is extracted and recognized. At this time, even when the business card is not exactly aligned with an outline of the preview image, text information may be extracted and recognized.

In addition, in one example, while the text information included in the business card is extracted and recognized, the preview image 801 itself may be captured and stored in the memory 160. In other words, the scanning of text is carried out simultaneously with capturing.

When all of the text information included in the business card is recognized, an extraction screen 802 is displayed, in which the extracted and recognized business card information is displayed in a predetermined type of business card image. Then, a plurality of search options are switched to function icons 830 related to business card information. A contact information storage icon 835 related to the attributes of business card information displayed on the extraction screen 802 is included in the function icons 830.

When a touch input is applied to the contact information storage icon 835, a contact add screen 8036 is displayed immediately. At this time, business card information that has been displayed on the extraction screen 802 is automatically entered into the contact item of the contact add screen 8036.

In addition, the present disclosure may be applicable not only to the preview image, but also to an image stored in the gallery application, and thus the user may only capture a business card or document and then apply a text search option at his or her desired time.

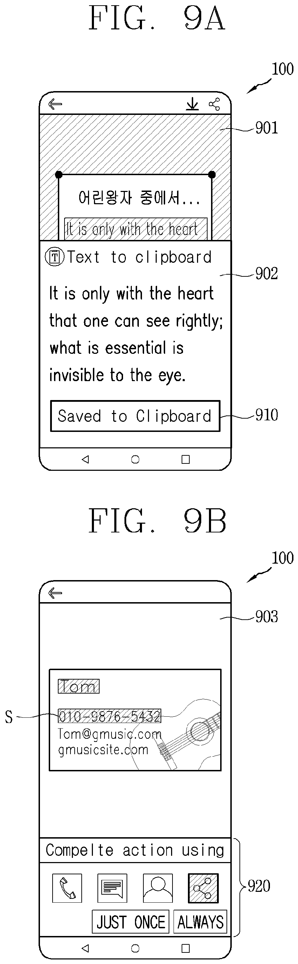

Meanwhile, FIGS. 9A through 9D show examples of other functions related to a text search option.

FIG. 9A provides an icon for storage at the bottom of the translation screen 902 for the extracted text information, for example, a clipboard type of storage icon 910. Here, when a touch input is applied to the storage icon 910, only the content of the translation screen 902 is stored in a clipboard separately from the extracted text information. Through this, it may be possible to process the extraction screen 901 and the translation screen 902 separately.

FIG. 9B shows an example of selecting some text information from the extraction screen 803 including business card information to immediately apply it to the execution of its related application.

Specifically, when a touch input is selectively applied only to "name" and "phone number" in the business card information of the extraction screen 803 illustrated in FIG. 9B, application icons 920 such as hyperlinked phone application, contacts application, share application for exporting contacts may be provided at the bottom of the display module 151a to immediately execute it with only the selected information.

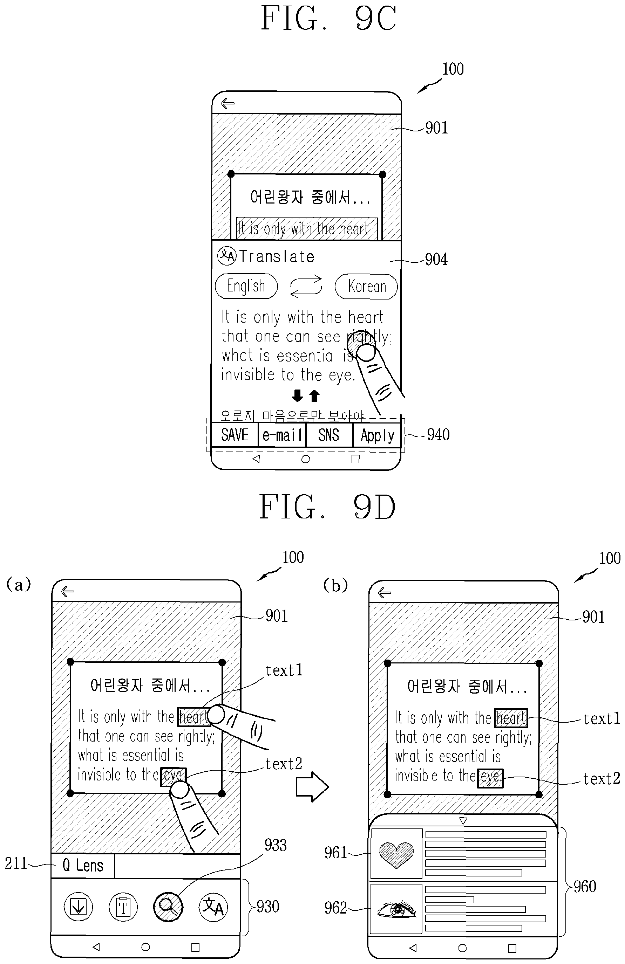

For an example of another function, as shown in FIG. 9C, when some translation languages are selected through a touch input on a translation screen 904 for text information included in the extraction screen 901, sub-function icons 940 related to the processing of the selected some translation languages may be additionally provided.

Furthermore, for another example, while a first group of function icons related to the processing of text information included in the extraction screen are displayed, as illustrated in FIG. 9D, the first group of function icons may be changed to a second group of function icons related to the attribute of some selected text in response to the selection of some text (e.g., "heart" (text1), "eye" (text2) in the extraction screen 901.

Specifically, in FIG. 9D, it may be seen that a web search function icon 933 related to text1 and text2 is provided as a user interface 930 (a). When a touch input is applied to the web search function icon 933, the web search results of text1 and text2 are displayed in an application screen 960, and image information 961, 962 for text1 and text2 are also displayed in the application screen 960 (b).

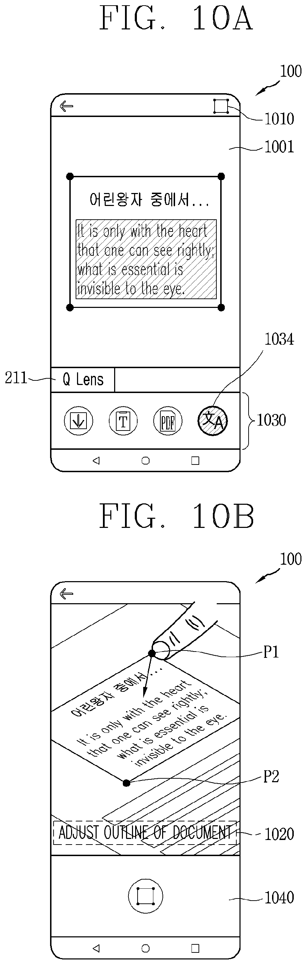

On the other hand, in a text search option, it may be possible to designate a specific text region to correct it in a desired form. FIGS. 10A and 10B show an example related to this.

Specifically, as illustrated in FIG. 10A, even after the extraction screen 1001 including the extracted text information is displayed, and a translation function icon 1034 is selected in connection to the processing of the text information, an execution icon 1010 for adjusting an outline of the extraction screen may be provided at an upper end of the display module 151.

When a touch input is applied to the execution icon 1010 for adjusting the outline of the extraction screen, a preview image screen is displayed again as illustrated in FIG. 10B. In addition, a guide object for adjusting the outline is displayed in a text region corresponding to the extraction screen in the preview screen. The user may apply a drag touch input to the corner points (P1, P2) of the guide object according to the guide of the displayed guide information 1020 to adjust the outline, that is a size of the crop area, of the extraction screen.

When the outline is adjusted in this way, the amount of text information included in the extraction screen is also automatically edited. Furthermore, the saved image may be varied or additionally saved to correspond to the changed outline.

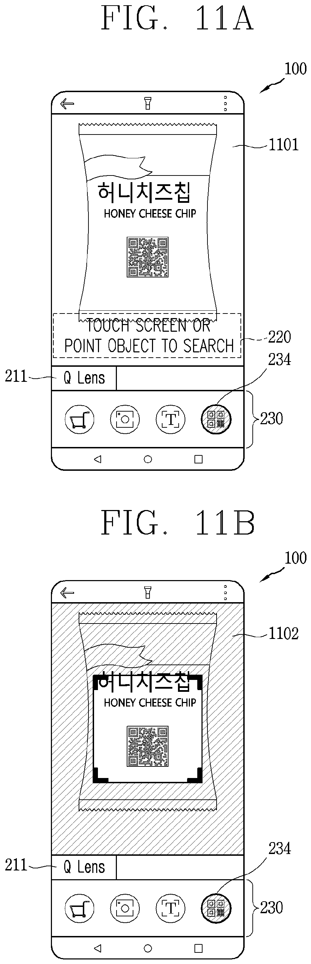

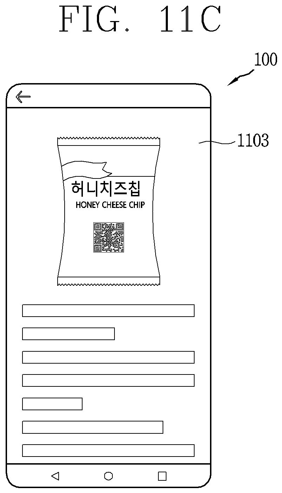

Hereinafter, FIGS. 11A, 11B and 11C show an example of an operation of executing a QR scan function on an image of a subject in a mobile terminal associated with the present disclosure.

First, referring to FIG. 11A, an object including a QR code is pointed on a preview image 1101 according to the execution of the camera, and a QR search option 234 selected in the user interface 230 including a plurality of search options is recognized.

Then, as illustrated in FIG. 11B, the preview image 1101 is switched to a screen 1102 on which a guide object for improving the recognition rate of the QR code is displayed. Here, the process of touching an object to select it may be omitted.

When the QR code included in the guide object is recognized, the screen is switched to a page 1103 corresponding to the recognized QR code as illustrated in FIG. 11C. Here, when a back control command is executed, the page 1103 may be quickly switched back to the screen 1102 of FIG. 11B.

As described above, according to a mobile terminal and a control method thereof according to an embodiment of the present disclosure, a user may specify a search target by simply pointing a camera without having to directly perform information search related to an object in reality, and quickly and easily acquire his or her desired information search result. Furthermore, a desired option may be accurately specified among a plurality of search options prior to image analysis on a subject, thereby eliminating errors due to automatic selection of a search object and a search option. In addition, a desired search result may be acquired by selecting a desired search option from a preview image including a plurality of objects, and then selectively specifying any one object from the beginning or including all of the objects. Moreover, it may be possible to quickly change a target object or a search option itself even after checking the search result.

The foregoing present disclosure may be implemented as codes readable by a computer on a medium written by the program. The computer-readable media may include all kinds of recording devices in which data readable by a computer system is stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include the controller 180 of the mobile terminal. Accordingly, the detailed description thereof should not be construed as restrictive in all aspects but considered as illustrative. The scope of the invention should be determined by reasonable interpretation of the appended claims and all changes that come within the equivalent scope of the invention are included in the scope of the invention.

## Claims

1. A mobile terminal, comprising:
a camera provided in a main body;
a display module that displays a preview image for the shooting of the camera; and
a controller that detects the entry of a subject into an information search mode while the preview image is being displayed, and detects the selection of one of a plurality of search options for the subject in the information search mode,
wherein the controller captures a subject including an object to which the selected search option is to be applied, and displays an image of the captured subject along with an application screen of the selected search option on the display module.

2. The mobile terminal of claim 1, wherein a plurality of items corresponding to an execution result of the selected search option for the object are displayed on the application screen of the selected search option, and
a page screen linked to the selected item is displayed in response to the selection of any one of the displayed plurality of items.

3. The mobile terminal of claim 1, wherein when a touch input is applied to a background region of the preview image subsequent to the selection of a search option, the selected search option is applied to all objects included in the preview image.

4. The mobile terminal of claim 1, wherein when a back execution command is received while the application screen of the selected search option is displayed, it is switched to a screen for changing an object to which the selected search option is to be applied.

5. The mobile terminal of claim 1, wherein, when a touch input is applied to any one object in a preview image including a plurality of objects subsequent the selection of a search option, the controller limits the application of the selected search option to the remaining objects.

6. The mobile terminal of claim 5, wherein while the image of the captured subject is displayed along with the application screen of the selected search option, a guide image indicating an object to which the selected search option is to be applied is displayed on the image of the captured subject.

7. A mobile terminal, comprising:
a camera provided in a main body;
a display module that displays a preview image for the shooting of the camera; and
a controller that detects the entry of a subject into an information search mode while the preview image is being displayed, and detects the selection of a text search option among a plurality of search options for the subject in the information search mode,
wherein the controller extracts text information to which the text search option is to be applied from the preview image based on a touch input applied to the preview image, and switches the preview image to an extraction screen displayed with the extracted text information, and switches the plurality of search options to a function icon related to the processing of text information displayed on the extraction screen to display the function icon.

8. The mobile terminal of claim 7, wherein the function icon related to the processing of the text information is determined differently according to the attribute of the text information displayed on the extraction screen.

9. The mobile terminal of claim 8, wherein an execution screen of a function corresponding to the selected function icon for the text information is displayed on the display module in response to the selection of any one of functions icons related to the processing of the text information.

10. The mobile terminal of claim 9, wherein when a touch input is applied to the execution screen, information displayed on the execution screen is saved along with the extraction screen.

11. The mobile terminal of claim 7, wherein in response to the selection of some texts in the extraction screen while a first group of function icons are being displayed, the first group of function icons are changed to a second group of function icons related to the attribute of the selected some texts.

12. The mobile terminal of claim 7, wherein a capture image of the preview image is stored in a memory while text information is extracted from the preview image according to a touch input applied to the preview image.
